# EUROPÄISCHE PATENTSCHRIFT

(11) **EP 0 344 231 B1**
(45) Veröffentlichungstag und Bekanntmachung des Hinweises auf die Patenterteilung: **24.11.1993**
(21) Anmeldenummer: 88908649.2
(22) Anmeldetag: 24.10.1988
(51) Int. Cl.: B27N 3/00, B27N 3/02, B27N 3/04

(54) **VERFAHREN ZUM HERSTELLEN EINES GEGEBENENFALLS PLATTENFÖRMIGEN KUNSTHARZ-DRUCKFORMKÖRPERS SOWIE VORPRODUKT ZUM EINSATZ BEI EINEM SOLCHEN VERFAHREN**
PROCESS FOR MANUFACTURING A COMPRESSION-MOULDED SYNTHETIC RESIN OBJECT, POSSIBLY IN BOARD FORM, AND FABRICATED MATERIAL FOR USE IN SAID PROCESS
PROCEDE DE FABRICATION D'UN CORPS EN RESINE SYNTHETIQUE, EVENTUELLEMENT EN FORME DE PANNEAU, MOULE PAR COMPRESSION ET PRODUIT PRELIMINAIRE UTILISE DANS CE PROCEDE

(30) Priorität: 23.10.1987 AT 2815/87
(43) Veröffentlichungstag der Anmeldung: 06.12.1989
(73) Patentinhaber: ISOVOLTA Österreichische Isolierstoffwerke Aktiengesellschaft, 2355 Wiener Neudorf (AT)
(72) Erfinder: MELCHER, Gerhard, A-1100 Wien (AT)
(74) Vertreter: Stampfer, Heinz
(86) Internationale Anmeldenummer: AT8800083
(87) Internationale Veröffentlichungsnummer: WO8903753

(56) Entgegenhaltungen:
- DE-A- 2 219 164
- DE-A- 3 132 467

## Beschreibung

### Technisches Gebiet

Die Erfindung betrifft ein Verfahren zum Herstellen eines Kunstharz-Druckformkörpers, bei dem auf getrocknete Holzfasern ein Bindemittel mit einem Kondensationsharz oder -harzgemisch auf Basis von Phenolen und/oder Aminoverbindungen und Aldehyden, wie Formaldehyd, zum Zwecke einer Imprägnierung aufgebracht und gegebenenfalls gemeinsam mit anderen Materalien wie Deck-und/oder Zwischenschichten unter Härtung des Harzes heißverpreßt werden.

### Stand der Technik

Ein Verfahren der vorgenannten Art ist aus der EP 0081147 B1 bekannt. Dieses Patent bezieht sich auf ein Verfahren zur Herstellung einer dekorativen Bauplatte, bei dem man auf Holzfasern eine wässrige alkalische Lösung oder Dispersion eines Phenol-Formaldehyd-Harzes aufbringt und die so beharzten Holzfasern auf eine Restfeuchte von 2 bis 15 % trocknet. Aus dem beharzten und getrockneten Holzfasern wird dann eine Faser-Matte geformt, die hatte mechanisch vorverdichtet und sie danach in einer oder mehreren übereinander angeordneten Schichten zu einer Kernschicht heißverpreßt, wobei man die dekorative Schicht gleichzeitig mit dem Verpressen oder nach diesem auf die Kernschicht aufbringt.

Mit diesem bekannten Verfahren soll eine Bauplatte erzeugt werden, die ähnliche Eigenschaften wie die in üblicher Weise hergestellten Schichtpreßstoffplatten hat, welche durch Heißverpressen von sogenannten "Prepregs", das sind mit härtbaren Kunstharzen imprägnierte Papiere in trockenem Zustand, hergestellt werden. Solche Schichtpreßstoffplatten weisen nun aber bedingt durch die bevorzugte Orientierung der Zellstoffasern des Papiers in der Papier-Erzeugungsrichtung unter schwankenden Klimabedingungen ein in Längs- bzw. Querrichtung der eingesetzten Papiere unterschiedliches Schrumpf- und Dehnungsverhalten auf, das sich bei ihrer Anwendung nachteilig auswirken kann. Außerdem stellen die eingesetzten Papiere ein Material dar, das aus dem Rohstoff Holz durch ein relativ aufwendiges und umweltbelastendes Verfahren hergestellt wird.

Bei den nach dem aus der EP 0081147 B1 bekannten Verfahren hergestellten Kunstharz-Druckformkörpern wird die genannte Anisotropie im Dehnungs- und Schrumpfverhalten vermieden und man kommt außerdem, da hier zu einem großen Teil statt Papieren direkt Holzfasern eingesetzt werden, global betrachtet mit einem geringeren Verfahrensaufwand als bei der üblichen Schichtpreßstoffplattenherstellung aus. Das Trocknen der beharzten Holzfasern bleibt aber weiter als aufwendiger und gegebenenfalls umweltbelastender Verfahrenschritt bestehen.

Aus der EP 0035133 B1 ist ferner die Herstellung von dekorativen Laminaten bekannt, bei dem in einem feuchten Luftstrom, in dem celluloseartige Fasern dispergiert sind, ein pulverförmiges Phenolharz eingebracht wird, wobei sich die Fasern und das Phenolharz mischen. Das Holzfaser-Phenolharzgemisch wird nun auf ein siebförmiges Band in Form einer Schicht abgelegt, die dann nach einer Vorverfestigung wie ein mit Harz imprägniertes Papier-"Prepreg" bei der Laminatherstellung eingesetzt werden soll. Der Einsatz von pulverförmigen Harzen in solchen Faser-"Prepregs" hat aber einige prinzipielle Nachteile. Zunächst besteht die Gefahr einer Entmischung von Fasern und Harzpulver bei Lagerung und Transport im Rahmen des Fertigungsprozesses. Außerdem weisen Phenolharze in Pulverform weniger niedermolekulare Anteile auf als flüssige Phenolharze. Dies führt beim späteren Heißverpressen zu einem schlechteren Fließen des Harzes und einer schlechteren Benetzunc und Durchdringung der Fasern durch das Harz.

### Darstellung der Erfindung

Der Erfindung liegt nun zunächst die Aufgabe zugrunde, ein Verfahren der eingangs der Beschreibung genannten Art anzugeben, bei dem unter Einsatz gut fließfähiger Kondensationsharz-Bindemittel die genannten Nachteile der bekannten Verfahren vermieden werden können.

Die der Erfindung zugrundeliegende Aufgabe wird nun in dem erfindungsgemäßen Verfahren gelöst, das dadurch gekennzeichnet ist, daß die auf einen Feuchtigkeitsgehalt von maximal 10%, vorzugsweise von maximal 8%, getrockneten Holzfasern in Form einer Holzfaser-Isolierplatte oder Holzfaser-Matte vorliegen, welche an einer oder beiden Seiten mit Schichten eines Kondensationsharz-Bindemittels in flüssiger oder streichbarer Form versehen wird, wobei das Kondensationsharz oder -harzgemisch einen Festharzgehalt von mindestens 80 Gew.% und einen Wassergehalt von höchstens 7 Gew.%, vorzugsweise höchstens 5 Gew.%, aufweist und das Zuschlagstoffe wie Farbpigmente enthält und daß zumindest ein Teil des Kondensationsharz-Bindemittels in diese Isolierplatte oder hatte eindringt, wobei die so mit Bindemittel beaufschlagte Isolierplatte oder Matte zumindest einen Teil der bei der Hochdruckformkörper-Herstellung zu verpressenden Masse bildet.

Dabei gelingt es meist durch einfache Abstimmung des Feuchtigkeitsgehaltes der getrockneten Holzfasern fasern auf dem Wassergehalt des Kondensationsharzes unter Berücksichtigung der Menge der eingesetzten Zuschlagstoffe einen "volatilen Gehalt" der Masse der mit dem Bindemittel imprägnierten oder beaufschlagten Holzfasern zwischen 3 und 10 Gew.% zu erhalten, bei dem diese Masse ohne einen trocknungsprozeß weiterverarbeitet werden kann. Der volatile Gehalt der Masse der mit dem Bindemittel imprägnierten oder beaufschlagten Holzfasern wird durch den Gewichtsverlust bestimmt, den diese Masse beim Erwärmen z. B. in einem Trockenschrank während 5 min bei 165°C erleidet. Dieser volatile Gehalt besteht zu einem großen Teil aus Wasser und sonst z.B. aus Phenol und niedermolekularen Harzanteilen. Sein richtiger Wert ist für ein gutes Verfließen der Harze beim Heißverpressen maßgeblich. Ist er zu niedrig, erfolgt kein gutes Verfließen, ist er jedoch zu hoch, wird die Aushärtung des Harzes beim Verpressen beeinträchtigt.

Die Bestimmung des Festharzgehaltes erfolgt dabei im Trockenschrank im Schälchen bei etwa 0,5 g Einwaage nach einer Trocknung während 60 min bei 130°C. Der Wasssergehalt des Harzes wird nach der bekannten Methode nach Karl Fischer bestimmt.

Nach einer vorteilhaften Ausgestaltung der Erfindung wird das Bindemittel bei erhöhter Temperatur, bei der eine Verringerung der Bindemittelviskosität eintritt, auf die Holzfasern aufgebracht.

In einer vorteilhaften Ausgestaltung des erfindungsgemäßen Verfahrens wird das in flüssiger Form vorliegende Bindemittel in mehreren Stufen auf die Holzfasern aufgebracht, wobei in der ersten Stufe die Viskosität des aufzubringenden Bindemittels niedriger ist als in jeder der übrigen Stufen. Dabei dringt In der ersten Stufe das aufgebrachte niedriger-viskose Bindemittel in die Holzfasern ein, während das in der zweiten bzw. in den folgenden Stufen aufgebrachte höher-viskose Bindemittel in der Folge hauptsächlich zum miteinander Verbinden der Holzfasern während der Hochdruckförmkörper-Herstellung dient.

Gemäß anderen vorteilhaften Ausgestaltungen des erfindungsgemäßen Verfahrens beträgt bei einer Hochdruckformkörper-Herstellung auf Basis von Holzfasern die aufgebrachte Bindemittelmenge zwischen 25 und 50 Gew.% dieser Menge, während bei einer Hochdruckformkörper-Herstellung mit einem überwiegend auf Basis von Aminoverbindungen erzeugten Kondensationsharz die aufgebrachte Harzmenge zwischen 80 und 160 Gew.% der Menge der Holzfasern und Zuschlagstoffe beträgt.

Ferner werden vorteilhaft die mit Bindemittel imprägnierten Holzspäne und/oder -fasern schichtförmig auf ein gegebenenfallS flächiges Trägermaterial aufgebracht, welches sich beim nachfolgenden Verdichten der Holzspäne und/oder -fasern mit diesen verbindet und einen Teil der bei der Hochdruckformkörper-Herstellung zu verpressenden Masse bildet, und es werden auf die mit Bindemittel beaufschlagten und schichtförmig auf eine Unterlage aufgebrachten Holzfasern ein flächiges Trägermaterial aufgelegt, welches sich beim nachfolgenden Verdichten der Holzfasern mit diesen verbindet und einen Teil der bei der Hochdruckformkörper-Herstellung zu verpressenden Masse bildet, Außerdem können die eingesetzten Trägermaterialien vorteilhaft mit einem härtbaren Bindemittel beschichtet oder imprägniert sein.

Gemäß einer letzten vorteilhaften Ausgestaltung der Erfindung werden mehrere solcher mit Bindemittel beaufschlagten Holzfaser-Isolierplatten oder Holzfaser-Matten übereinander angeordnet miteinander heiß verpreßt.

### Kurze Beschreibung der Zeichnungen

Die Fig. 1a, 1b und 1c beziehen sich auf Beispiel 3, wobei Fig. 1a eine einseitig, Fig. 1b eine beidseitig mit Kunstharz beaufschlagte Isolierplatte und Fig. 1c einen aus mehreren derartigen Isolierplatten hergestellten Hochdruckformkörper zeigen.

Den Fig. 2a und 2b ist die in Beispiel 4 beschriebene Ausführungsform der Erfindung zu entnehmen, demzufolge ein Hochdruckformkörper aus mehreren mit Bindemittel bestrichenen Holzfasermatten hergestellt wird.

### Allgemeiner Ausführungsweg

### Beispiel 1:

Holzspäne, wie man sie bei einer Holzspanplattenerzeugung als Deckschichtspäne einsetzt, werden in einem Trockner auf einen Feuchtigkeitsgehalt von 3,0% und danach mit einem hochkonzentrierten Phenolharz (Festharzgehalt: 82%, Wassergehalt: 1,8%) , welches zur Viskositätserniedrigung auf (40°C erwärmt worden war, mit einer Harzauftragsmenge von 40% gemischt. wodurch sich ein Wassergehalt der mit dem Harz beaufschlagten Späne mit 2,65% ergibt.

Zur Herstellung des Hochdruckformkörpers dient eine Presse mit Preßblechumlauf. Auf die Preßbleche werden jeweils in nachstehender Reihenfolge aufeinander eine Trennfolie, ein mit einem Melaminharz mit einem Harzauftrag von 140% imprägniertes Dekorpapier einer Grammatur von 100 g/m² und ein mit Phenolharz mit einem Harzauftrag von 40% imprägniertes Natronkraftpapier (200 g/m² ) aufeinandergeschichtet und danach aus den mit Harz beaufschlagten Spänen eine ca. 90 mm dicke Schüttung mit einer Schüttdichte von 0,15 kg/l aufgestreut. Dieselben imprägnierten Papiere bzw. die Trennfolie, wie sie als Unterlagen für die Späneschüttung dienen, werden dann - nun aber in umgekehrter Reihenfolge - auf die Späneschüttung aufgebracht. Das Ganze wird dann auf dem Preßblech in die Presse verbracht und bei einem Druck von 70 bar und einer Temperatur von 140°C während 20 min verpreßt. Dabei verfließen die in der Späneschüttung und den imprägnierten Papieren enthaltenen Kunstharze und härten in der Folge aus. Nach Rückkühlung der Presse wird der fertige plattenförmige Hochdruckformkörper aus der Presse ausgebracht.

Der so erzeugte plattenförmige Hochdruckformkörper hat bei einer Dicke von 10 mm, eine Dichte von ca. 1,4 g/cm³, eine Biegefestigkeit von 90 N/mm² (nach DIN 53799), eine Zugfestigkeit von 52 N/mm² sowie eine Wasseraufnahme von 0,9% (nach DIN 53799).

Aus verfahrenstechnischen Gründen kann es zweckmäßig sein, bei der Herstellung der Hochdruckförmkörper als Preßgut, welches die Holzfasern enthält, von hantier- und/oder transportierbaren Vorprodukten auszugehen, die in ähnlicher Weise eingesetzt werden können, wie es bei den Prepregs bei der üblichen Kunstharz-Schichtpreßstoffplatten-Herstellung der Fall ist. Varianten, bei denen solche Vorprodukte zum Einsatz gelangen, seien nun nachstehend beschrieben.

### Beispiel 2:

Bei diesem Beispiel geht man von auf übliche Weise hergestellten Holzfasern aus, die zunächst auf einem Feuchtigkeitsgehalt von 4% getrocknet und danach mit einem hochkonzentrierten Phenolharz als Bindemittel (Festharzgehalt: 83,5%, Wassergehalt: 2,2%) beleimt werden. Zum Herstellen eines plattenförmigen Vorpreßlings wird z.B. eine beheizbare Mehretagenpresse eingesetzt, die für Preßdrücke bis zu 20 - 25 bar ausgelegt ist. Auf ein Preßblech wird zunächst eine Trennfolie, danach ein mit einem Phenolharz mit 40% Harzauftrag imprägniertes Natronkraftpapier (200 g/m²) als untere Deckschicht aufgelegt und auf diese dann die beleimten Holzfasern in einer Schichtdicke von 210 mm (Schüttgewicht 0,02 kg/l) aufgestreut. Diese Faserschüttung wird dann mit dem gleichen imprägnierten Natronkraftpapier wie die untere Deckschicht und schließlich mit einer Trennfolie abgedeckt. Das Ganze wird dann auf dem Preßblech in die Presse eingefahren und bei einem Druck von 20 bar und einer Temperatur von 80°C während 5 min verpreßt. Man erhält dabei einen plattenförmigen Vorpreßling einer Dicke von ca. 7 mm der noch heiß aus der Presse ausgeformt wird und der als gut hantier- und transportierbares Vorprodukt bei der Herstellung von Hochdruckformkörpern eingesetzt werden kann.

Für die Herstellung des Hochdruckformkörpers werden z.B. in nachstehender Reihenfolge aus
- einem Preßblech mit Oberflächenstruktur
- einer Trennfolie,
- einem mit Melaminharz mit 110% Harzauftrag imprägnierten Dekorpapier (100 g/m²),
- zwei der oben beschriebenen Vorpreßlinge,
- demselben imprägnierten Dekorpapier wie oben
- einer Trennfolie und
- einem zweiten Preßblech mit Oberflächenstruktur
ein Aufbau erzeugt, der dann in einer Hochdruckpresse bei einem Druck von 70 bar und einer Temperatur von 140°C während 20 min verpreßt und ausgehärtet wird. Nach Rückkuhlung der Presse wird die dabei erzeugte, mit dekorativen und strukturierten Oberflächen versehene Platte aus der Presse ausgebracht. Diese Platte hat eine Dicke von 6 mm, ein spezifisches Gewicht von 1,4 g/cm³, eine Biegefestigkeit von 90 N/mm² und eine Wasseraufnahme von 0.6%.

Gemäß einer Variante dieses Beispiels wird das eingesetzte Phenolharz mit Harnstoffharz, das billiger als Phenolharz ist, in einer Menge von etwa 10 % versetzt, ohne daß sich dadurch die Qualität der erzeugten Platte merklich ändert.

### Erfindungsgemäßer Ausführungsweg

### Beispiel 3:

Zur Herstellung eines plattenförmigen Vorproduktes für die Hochdruckformkörper-Herstellung wird eine Holzfaser-Isolierplatte, wie sie für Bauzwecke im Handel erhältlich ist (z.B. eine Holzfaser-Isolierplatte der Firma Leitgeb, Kärnten) und die eine Dicke von 10 mm und ein spezifisches Gewicht von 0.25 g/cm³ aufweist, gegebenenfalls durch Trocknung auf einen Feuchtigkeitsgehalt von ca. 5% eingestellt. Danach wird diese Isolierplatte durch ein- oder mehrmaliges Aufstreichen oder Aufsprühen an einer Oberflächenseite mit einem hochkonzentrierten, auf eine Temperatur von 50°C gebrachten Phenolharz (Festharzgehalt: 83%, Wassergehalt: 2,7%) mit einem auf das Plattengewicht bezogenen Harzauftrag von 40% (= 1 kg Harz pro m² Plattenoberfläche) beaufschlagt. Dieser Harzauftrag wird danach sofort von dem faserigen Plattenmaterial aufgesaugt und nimmt dann eine ca. 3 mm dicke Schicht an der Oberfläche der Platte ein. Neben solchen an einer Oberfläche mit Phenolharz beaufschlagten Holzfaser-Isolierplatten werden für die spätere Weiterverarbeitung auch beidseitig mit Harz beaufschlagte Isolierplatten benötigt, zu deren Herstellung nach dem Aufbringen und Aufsaugen des Harzes an der einen Oberflächenseite der Platte in gleicher Weise auch auf der anderen Oberflächenseite Phenolharz aufgebracht und danach vom Plattenmaterial aufgesaugt wird.

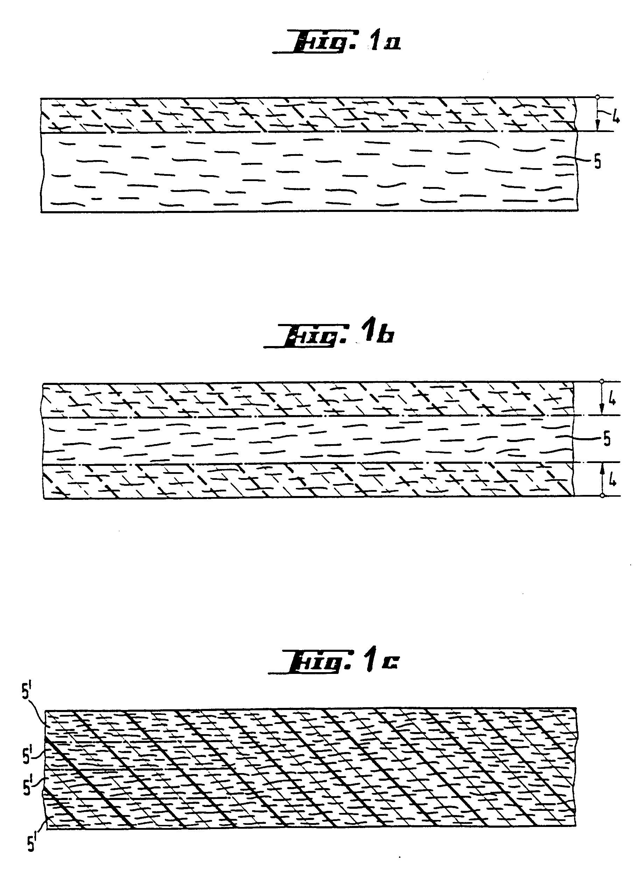

Die Fig 1a und 1b stellen ein- bzw. beidseitig mit Bindemittel beaufschlagte Isolierplatten 5 im Schnitt dar, wobei die Eindringtiefe des Bindemittels mit 4 bezeichnet ist.

Für die Herstellung des in Fig. 1c dargestellten plattenförmigen Hochdruckformkörpers wird auf ein Preßblech zwischen zwei Trennfolien ein Aufbau aus einer beidseitig beharzten Holzfaser-Isolierplatte und darauf drei mit der Harzschicht jeweils nach oben angeordnete einseitig beharzte Isolierstoffplatten in eine Hochdruckpresse eingebracht und heiß verpreßt. Dabei wird dieser Vorprodukt-Aufbau zunächst während einer Aufheizphase auf 100°C gebracht, dabei auf seine halbe ursprüngliche Dicke zusammengepreßt und es wird anschließend diese Temperatur während 5 min gehalten. Während dieser Aufheizphase und Haltezeit verteilt sich das nun gut fließfähige Phenolharz über das Preßgut und bildet schließlich eine gleichmäßige Imprägnierung der vier Holzfaser-Isolierstoffplatten 5' bei noch lockerem Fasergefüge. Anschließend werden Temperatur und Druck auf 140°C und 70 bar erhöht und während 20 min unter Aushärtung des Phenolharzes gehalten.

Der nach Rückkühlung aus der Presse entnommene und abgekühlte plattenförmige Hochdruckformkörper hat eine Dicke von 10 mm, eine Biegefestigkeit von 95 N/mm², eine Zugfestigkeit von 70 N/mm² und eine Wasseraufnahme von ca. 0.8%.

### Beispiel 4:

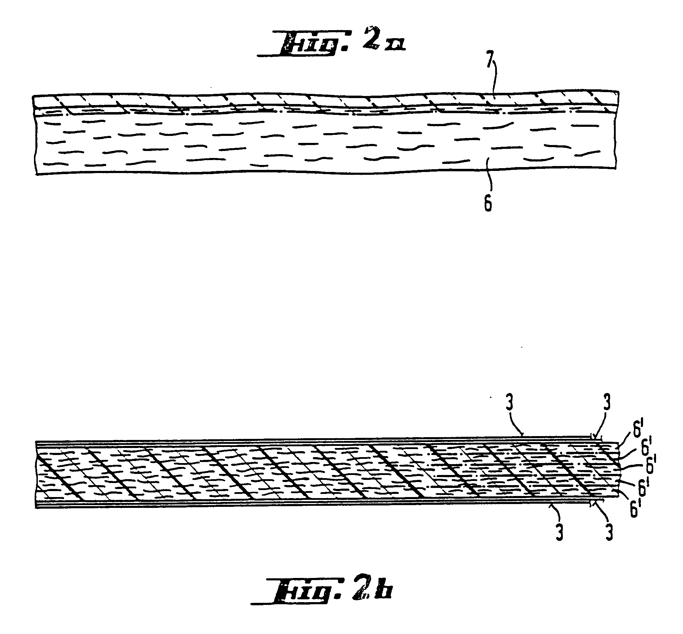

Zur Herstellung eines plattenförmigen Vorproduktes wird hier von einer Holzfaser-Matte 6 (siehe Fig. 2a) aus gebleichtem Holzfaserstoff einer Dicke von 5 mm und einem spezifischen Gewicht von 0,10 g/cm³ (Flächengewicht 0,05 g/cm²) ausgegangen, die auf einem Feuchtigkeitsgehalt von 2,5 % getrocknet wurde. Als Bindemittel dient eine Mischung aus 30 Gew. % festem Melaminformaldehydpulverharz und 40 Gew.% eines teilweise methylverätherten Hexamethylolmelamins und als Pigmentzuschlagstoff 30 % TiO₂. Diese Mischung wird auf 50°C gebracht. bei der sie hoch viskos aber gut streichfähig ist,und auf die Holzfaser-Matte 6 in Form einer gleichmäßig dicken Schicht 7 aufgestrichen, wobei per cm² 0,075g aufgetragen werden. Unmittelbar nach dem. Aufstreichen sinkt die Bindemittel-Schicht 7 ein wenig in die Matte 6 ein.

Zur Herstellung des in Fig. 2b dargestellten Hochdruckformkörpers werden fünf mit Harz beschichtete Holzfaser-Matten 6' übereinandergelegt, an Ober- und Unterseite mit jeweils zwei weißen, mit Melaminharz getränkten Dekorpapieren 3 abgedeckt und in einer Hochdruckpresse bei 100°C während 5 min auf das halbe Volumen der Rohmatten zur Durchimprägnierung der Matten mit dem Bindemittel gepreßt und anschließend unter Hochdruck bei 75 bar 20 min bei 140°C zu einer 5 mm dicken, weiß durchfärbten, dekorativen Platte verpreßt.

Obwohl die vorstehenden Beispiele die Herstellung von Platten beschreiben, können, wie leicht einzusehen ist, mit dem erfindungsgemäßen Verfahren auch anders geformte Druckformkörper hergestellt werden.

### Gewerbliche Verwertbarkeit

Die nach dem erfindungsgemäßen Verfahren hergestellten Druckformkörper können weitgehend auf demselben Anwendungsgebiet eingesetzt werden, wie die üblichen dekorativen Kunstharz-Hochdrucklaminate größerer Starke (z.B. zwischen 3 und 15 mm dick) z.B. also zur Herstellung von selbsttragenden Bauteilen bzw. als witterungsfeste Platten zur Außenanwendung.

## Patentansprüche

1. Verfahren zum Herstellen eines Kunstharz-Druckformkörpers, bei dem auf getrocknete Holzfasern ein Bindemittel mit einem Kondensationsharz oder -harzgemisch auf Basis von Phenolen und/oder Aminoverbindungen und Aldehyden, wie Formaldehyd, zum Zwecke einer Imprägnierung aufgebracht und gegebenenfalls gemeinsam mit anderen Materialien, wie Deck- und/oder Zwischenschichten unter Härtung des Harzes heißverpreßt werden, dadurch gekennzeichnet, daß die auf einen Feuchtigkeitsgehalt von maximal 10%, vorzugsweise von maximal 8%, getrockneten Holzfasern in Form einer Holzfaser-Isolierplatte oder Holzfaser-Matte vorliegen, welche an einer oder beiden Seiten mit Schichten eines Kondensationsharz-Bindemittels in flüssiger oder streichbarer Form versehen wird, wobei das Kondensationsharz oder -harzgemisch einen Festharzgehalt von mindestens 80 Gew.% und einen Wassergehalt von höchstens 7 Gew.%, vorzugsweise höchstens 5 Gew.%, aufweist und das Zuschlagstoffe wie Farbpigmente enthält und daß zumindest ein Teil des Kondensationsharz-Bindemittels in diese Isolierplatte oder Matte eindringt, wobei die so mit Bindemittel beaufschlagte Isolierplatte oder hatte zumindest einen Teil der bei der Hochdruckformkörper-Herstellung zu verpressenden Masse bildet.

2. Verfahren nach Anspruch 1, dadurch gekennzeichnet, daß die Masse der Holzfasern nach Aufbringungen des Bindemittels ohne besonderen Trockungsprozeß weiterverarbeitet wird.

3. Verfahren nach einem der Ansprüche 1 oder 2, dadurch gekennzeichnet, daß das Bindemittel bei erhöhter Temperatur auf die Holzfasern aufgebracht wird.

4. Verfahren nach Anspruch 1 oder 2, dadurch gekennzeichnet, daß das Bindemittel in flüssiger Form vorliegt und in mehreren Stufen auf die Holzfasern aufgebracht wird, wobei in der ersten Stufe die Viskosität des aufzubringenden Bindemittels niedriger ist als in jeder der übrigen Stufen.

5. Verfahren nach einem der Ansprüche 1 bis 4, dadurch gekennzeichnet, daß bei einer Hochdruckformkörperherstellung und einem Bindemittel aus einem überwiegend auf Basis von Phenolen erzeugten Kondensationsharz die aufgebrachte Bindemittelmenge zwischen 25 und 50 Gew.% der Menge der Holzfasern und Zuschlagstoffe beträgt.

6. Verfahren nach einem der Ansprüche 1 bis 4, dadurch gekennzeichnet, daß bei einer Hochdruckformkörperherstellung und einem Bindemittel aus einem überwiegend auf Basis von Aminoverbindungen erzeugten Kondensationsharz die aufgebrachte Harzmenge zwischen 80 und 160 Gew.% der Menge der Holzfasern und Zuschlagstoffe beträgt.

7. Verfahren nach einem der Ansprüche 1 bis 6, dadurch gekennzeichnet, daß die mit Bindemittel imprägnierten Holzfasern schichtförmig auf ein flächiges Trägermaterial aufgebracht werden, welches sich beim nachfolgenden Verdichten der Holzfasern mit diesen verbindet und einen Teil der bei der Hochdruckformkörper-Herstellung zu verpressenden Masse bildet.

8. Verfahren nach einem der Ansprüche 1 bis 7, dadurch gekennzeichnet, daß auf die mit Bindemittel imprägnierten und schichtförmig auf eine Unterlage aufgebrachten Holzfasern ein flächiges Trägermaterial aufgelegt wird, welches sich beim nachfolgenden Verdichten der Holzfasern mit diesen verbindet und einen Teil des Vorpreßlings bildet.

9. Verfahren nach einem der Ansprüche 1 bis 8, dadurch gekennzeichnet, daß die eingesetzten Trägermaterialien mit einem härtbaren Bindemittel beschichtet oder imprägniert sind.

10. Verfahren nach einem der Ansprüche 1 bis 9, dadurch gekennzeichnet, daß mehrere solcher mit Bindemittel beaufschlagte Holzfaser-Isolierplatten oder Holzfaser-Matten übereinander angeordnet miteinander heißverpreßt werden.

## Claims

1. A method of producing a synthetic-resin pressure shaped body, in which a binding agent with a condensation resin or condensation-resin mixture on the basis of phenols and/or amino compounds and aldehydes, such as formaldehyde, are applied to dried wood fibres for the purpose of an impregnation and are hot-pressed possibly jointly with other materials, such as surface and/or intermediate layers along with hardening of the resin, characterised in that the wood fibres dried to a moisture content of a maximum of 10%, preferably a maximum of 8%, are present in the form of a wood-fibre insulating board or wood-fibre mat, which are provided on one or both sides with layers of a condensation-resin binding agent in liquid or spreadable form, the condensation resin or condensation-resin mixture having a solid-resin content of at least 80% by weight and a water content of at the most 7% by weight, preferably at the most 5% by weight, and which contains additives such as colouring pigments and in that at least part of the condensation-resin binding agent penetrates into this insulating board or mat, the insulating board or mat acted upon in this way with binding agent forming at least part of the mass that is to be pressed upon the high-pressure shaped-body production.

2. A method according to claim 1, characterised in that the mass of wood fibres is further processed after applications of the binding agent without a special drying process.

3. A method according to one of claims 1 or 2, characterised in that the binding agent is applied at increased temperature to the wood fibres.

4. A method according to claim 1 or 2, characterised in that the binding agent is present in liquid form and is applied in several stages to the wood fibres, in the first stage the viscosity of the binding agent that is to be applied being lower than in each of the remaining stages.

5. A method according to any one of claims 1 to 4, characterised in that in the case of a high-pressure shaped-body production and a binding agent consisting of a condensation resin produced predominantly on the basis of phenols the amount of binding agent applied amounts to between 25% and 50% by weight of the amount of wood fibres and additives.

6. A method according to any one of claims 1 to 4, characterised in that in the case of a high-pressure shaped-body production and a binding agent consisting of a condensation resin produced predominantly on the basis of amino compounds the amount of resin applied amounts to between 80% and 160% by weight of the amount of wood fibres and additives.

7. A method according to any one of claims 1 to 6, characterised in that the wood fibres impregnated with binding agent are applied in layer form to a flat carrier material which upon the subsequent compression of the wood fibres unites with these and forms part of the mass that is to be pressed upon the high-pressure shaped-body production.

8. A method according to any one of claims 1 to 7, characterised in that onto the wood fibres impregnated with binding agent and applied in layer form to a substrate there is placed a flat carrier material which upon the subsequent compression of the wood fibres unites with these and forms part of the pre-pressed article.

9. A method according to any one of claims 1 to 8, characterised in that the carrier materials used are coated or impregnated with a hardenable binding agent.

10. A method according to any one of claims 1 to 9, characterised in that several such wood-fibre insulating boards or wood-fibre mats acted upon with binding agent arranged one above the other are hot-pressed together.

## Revendications

1. Procédé de fabrication d'un corps en résine synthétique moulé par compression, dans lequel sont pressés à chaud avec durcissement de la résine, sur des fibres de bois séchées, un liant à base d'une résine ou un mélange de résines de condensation à base de phénols et/ou de dérivés aminées et d'aldéhyde, tel que du formaldéhyde, afin de réaliser une imprégnation, le cas échéant avec d'autres matériaux tels que des couches de recouvrement et/ou intermédiaires, caractérisé en ce que les fibres de bois séchées dont la teneur en humidité est de 10% maximum, de préférence 8% maximum, se présentent sous la forme d'une plaque d'isolation en fibres de bois ou d'un mat en fibres de bois, qui est muni sur l'une ou sur les deux faces de couches d'un liant en résine de condensation sous forme liquide ou susceptible d'être étendue, la résine ou le mélange de résines de condensation présentant une teneur en résine dure d'au moins 80% en poids, et une teneur en eau d'au plus 7% en poids, de préférence d'au plus 5% en poids, et contenant des additifs tels que des pigments colorés, et en ce qu'au moins une partie du liant à base de résine de condensation pénètre dans cette plaque isolante ou ce mat, la plaque isolante ou mat recouvert de liant formant ainsi au moins une partie de la masse à comprimer au cours du procédé de fabrication par moulage à haute pression.

2. Procédé selon la revendication 1, caractérisé en ce que la masse des fibres de bois est, après application du liant, transformée ultérieurement sans processus de séchage particulier.

3. Procédé selon l'une des revendications 1 ou 2, caractérisé en ce que le liant est appliqué sur les fibres de bois à température élevée.

4. Procédé selon la revendication 1 ou 2, caractérisé en ce que le liant est présent sous forme liquide et est appliqué en plusieurs étapes sur les fibres de bois, la viscosité du liant à appliquer étant plus faible au cours de la première étape qu'au cours de chacune des étapes suivantes.

5. Procédé selon l'une des revendications 1 à 4, caractérisé en ce que, pour un procédé de fabrication de corps par moulage à haute pression et un liant à base d'une résine de condensation principalement à base de phénols, la quantité de liant appliqué est comprise entre 25 et 50% en poids par rapport à la quantité des fibres de bois et des additifs.

6. Procédé selon l'une des revendications 1 à 4, caractérisé en ce que, pour un procédé de fabrication par moulage à haute pression et un liant à base d'une résine de condensation fabriquée principalement à base de dérivés aminés, la quantité de résine appliquée est comprise entre 80 et 160% en poids par rapport à la quantité des fibres de bois et des d'additifs.

7. Procédé selon l'une des revendications 1 à 6, caractérisé en ce que les fibres de bois imprégnées de liant sont appliquées en forme de strates sur un matériau support plan, qui, au cours de la compression des fibres des bois qui suit, est lié à ces fibres et constitue une partie de la masse à comprimer au cours du procédé de fabrication par moulage à haute pression.

8. Procédé selon l'une des revendications 1 à 7, caractérisé en ce que, sur les fibres de bois imprégnées de liant et en forme de strates qui sont disposées sur une sous-couche, l'on dispose un matériau support plan qui, au cours de la compression des fibres de bois qui suit, se lie à ces dernières et forme une partie de l'ébauche à la compression.

9. Procédé selon l'une des revendications 1 à 8, caractérisé en ce que les matériaux supports insérés sont stratifiés ou imprégnés avec un liant durcissable.

10. Procédé selon l'une des revendications 1 à 9, caractérisé en ce que plusieurs de ces plaques d'isolation en fibres de bois ou mats en fibres de bois recouverts de liant sont comprimés ensemble à chaud, disposés les uns au-dessus des autres.
